# EUROPEAN PATENT SPECIFICATION

(11) **EP 3 387 195 B1**
(45) Date of publication and mention of the grant of the patent: **30.12.2020**
(21) Application number: 16831587.7
(22) Date of filing: 12.12.2016
(51) Int. Cl.: E03F 1/00, B01D 35/02, B01D 35/147

(54) **FILTER DEVICE FOR SEWAGE AND DRAINAGE SYSTEMS**
FILTERVORRICHTUNG FÜR UND ABWASSER- UND KANALISATIONSSYSTEME
DISPOSITIF DE FILTRE POUR SYSTÈMES D'ÉGOUT ET DE DRAINAGE

(30) Priority: 10.12.2015 NO 20151696
(43) Date of publication of application: 17.10.2018
(73) Proprietor: Norwest AS, 6290 Haramsøy (NO)
(72) Inventor: BAADE, Raymond, 6060 Hareid (NO)
(74) Representative: Zacco Norway AS
(86) International application number: PCT/NO2016/050260
(87) International publication number: WO 2017/099609

(56) References cited:
- AU-B2- 490 208
- US-A- 3 738 489
- US-A- 3 839 745
- US-A1- 2004 035 768

## Description

### Field of the invention

The invention concerns a filter device for sewage and drainage systems, for example marine toilets. The filter device comprises housing, valves and waste flow passages, as set out by the preamble of claim 1. The invention also concerns a method for cleaning the filter device for sewage treatment.

### Background of the invention

Some sewage and drainage systems, e.g. marine toilets use very little water and clogging is a very common problem, it is often challenging to unclog the waste lines. Because of people throwing things that should not be in the toilet such as hand papers, diapers, tampons, etc. The waste lines, pumps, valves and the vacuum systems cannot handle these solids. It is advised not to put anything down the toilets that may clog the waste line, but this happens very often. The problem is that when an object accidently falls in the toilet, it is often flushed. This results in clogged waste line or a broken vacuum systems or pumps. A considerable amount of work is needed to unplug waste lines or repair broken components. Many toilets on the ship, if not all must be closed until the problem is overhauled. If a waste line is clogged, then it is difficult and time consuming to locate where it is clogged. Usually, toilet waste lines on a ship are divided into two or more groups, e.g., port side and starboard side, each group having its own vacuum system/pump. Sometimes one or more vacuum systems/pumps may be connected to both groups from both sides, the vacuum system having suction from both sides and regulated by valves

The waste line that runs direct from each toilet consists of several small diameter pipes connected to each other (e.g. 50mm). These small diameter pipes are joined with the main waste line which consists of pipes with bigger diameter (e.g. 100mm). The clogging problems are often associated with the small diameter pipes and often at the location where these pipes are joined. Because of this problem several areas are often shut-off, this yields many cabins to become inaccessible for a period of time, for example all toilets at the port side or all toilet at the starboard side. In many cases, one must take down the roof panels where the waste pipes are located to dismantling them. If a waste pipe is dismantled and found to be part of the clogged side, then there is a great risk of sewage flooding the area, which again needs a considerable time of cleaning.

US 3839745 A discloses a chemical service unit removably connected or incorporated in portable lavatory accommodation comprising a chemical liquid container divided by a filter screen into a first compartment containing clear liquid and a second compartment receiving discharge from the accommodation. A continuously operable pump draws off flushing liquid from the second compartment and delivers it to cisterns; a by pass connection including a pressure relief valve passes liquid to the first compartment and creates the necessary back pressure in the flushing liquid. An air pump forces air into a perforated tube on the floor of the second compartment to provide air bubbles for breaking up soil.

US 3738489 A describes a recirculating tank suitable for receiving effluent from a marine head, or similar device, having an improved filter means comprising a filter element which is circumferentially surrounded by the holding tank primary chamber and having a bottom spaced above the bottom of the holding tank. As another feature, the filter construction is attached to only one wall of the holding tank and extends therein to further extend its utility, the filter element being provided with a transparent visual inspection plate located on the exterior of the holding tank.

It is the aim of the present invention to mitigate at least one of the above mentioned problems.

### Summary of the invention

The invention is indicated in claim 1. Other alternative and/or beneficial embodiments are indicated in the dependent claims.

It is provided a filter device for sewage treatment, the device comprising a housing compartment with a removable cover, an inlet before said housing compartment, an inlet valve before said housing compartment and an outlet after said housing compartment. The housing compartment is provided with a filter comprising stationary or moving blades, a by-pass passage having a drainage inlet from said housing compartment and a drainage outlet after the said housing compartment, said by-pass drainage passage being provided with a drainage valve between the inlet and outlet.

In one embodiment the filter device comprises an outlet valve between the housing compartment and the drainage outlet.

In one embodiment the housing compartment is made of transparent material.

In one embodiment the removable cover is made of transparent material.

In one embodiment the filter is configured to macerate any solid objects in the housing compartment.

In one embodiment the filter is configured to grind any solid objects in the housing compartment to small particles.

In one embodiment the filter is provided with a motor.

In one embodiment the drainage inlet and the drainage outlet comprise covering means.

In one embodiment the outlet (8) is smaller than the inlet (7).

It is also provided a method of cleaning the filter device comprising the steps of:
a) closing the waste inflow by closing the inlet valve,
b) opening the by-pass drainage passage by opening the drainage valve,
c) draining sewage from the housing compartment through the by-pass drainage passage,
d) opening housing cover and removing all the solid objects in the housing compartment.

In one embodiment after step (b), and before step (c), closing waste outflow from the housing compartment via outlet by closing the outlet valve.

In one embodiment a vacuum is used to drain the sewage from the housing compartment through the by-pass drainage passage.

In one embodiment the housing cover is reattached to the housing compartment.

In one embodiment the drainage valve is shut off after the housing compartment is cleaned.

### Brief description of the drawings

These and other characteristics of the invention will become clear from the following description of a preferential form of embodiment, given as a non-restrictive example, with reference to the attached schematic drawings, wherein:
Figure 1 is a section view of the filter device.
Figure 2 is a perspective view of the filter device.
Figure 3 is another perspective view of the filter device.

### Detailed description of a preferential embodiment

The following description may use terms such as "horizontal", "vertical", "lateral", "back and forth", "up and down", "upper", "lower", "inner", "outer", "forward", "rear", etc. These terms generally refer to the views and orientations as shown in the drawings and that are associated with a normal use of the invention. The terms are used for the reader's convenience only and shall not be limiting.

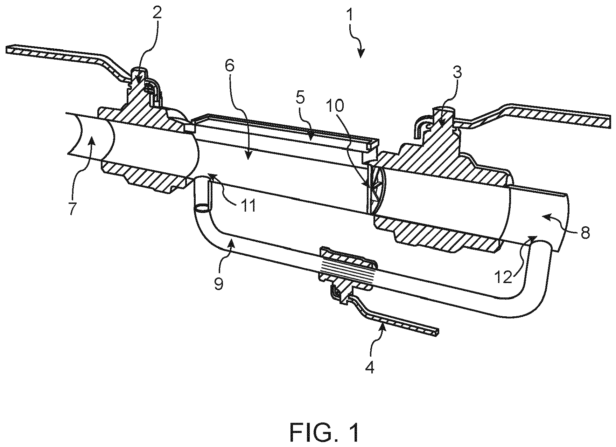

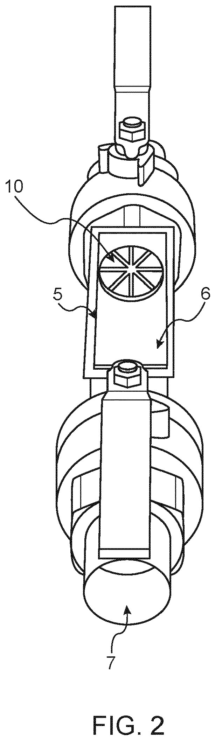

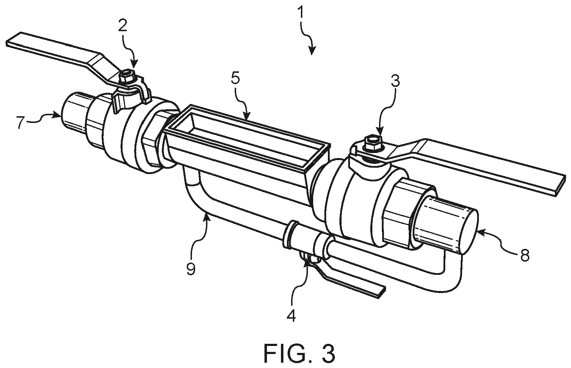

Figures 1-3 show possible embodiments of the present invention. A filter device (1) comprises an inlet valve (2) for turning on and off the waste inflow from a toilet (not shown) into the filter device (1) through an inlet (7), an outlet valve (3) for turning on and off the waste outflow from the filter device (1) through an outlet (8). The outlet (8) might be connected to a vacuum system, a pump, collecting tank or any other processing or storage unit at a distance. The filter device further comprises a filter (10) in a housing compartment (6) which is in between the inlet valve (2) and the outlet valve (3). The filter (10) is preferably arranged at a location near the outlet valve (3) and the housing compartment (6) which the filter (10) is arranged in is sealed by a cover (5). The cover (5) may be made of a transparent material (e.g. glass or plexi) for easy inspection, access and removal of any solid objects clogging up the filter (10). Below the housing compartment (6), a by-pass drainage passage (9) is arranged. The by-pass drainage passage (9) comprises a by-pass drainage passage inlet (11) at a location in the housing compartment (6), a by-pass drainage passage outlet (12) at a location on the waste outlet (8) and a by-pass drainage passage valve (4) at a location between the by-pass drainage passage inlet (11) and the drainage passage outlet (12) for opening and closing the by-pass drainage passage (9).

The waste from the toilet passes via inlet (7) and through the housing compartment (6) where the filter (10) is arranged. The solids within the waste are macerated by the filter (10) into small particles which can easily pass the filter openings and further in to the outlet (8). The outlet (8) may be connected to a vacuum system at a distance, in such way that when the vacuum system is activated it sucks the sewage through the outlet (8).

The filter (10) is capable of grinding paper like objects. This may be done by crushing, triturating or pounding the solid object in filter (10). These examples are not meant to be limiting, other grinding technics fall within the scope of the present invention. Some solid objects might be difficult for the filter (10) to grind. If an object cannot be grinded into small particles by the filter (10), it remains in the housing compartment (6). Several solid objects in the housing compartment (6) results clogged housing compartment (6). When clogged toilet is discovered, the filter device (1) for that particular toilet is located and cleaned. Several toilets might be grouped and may contain only one filter device. The filter device (1) according to the present invention traps all heavy objects which are impossible for the filter (10) to macerate into the housing compartment (6) and in that way isolates these objects from the vacuum systems, pumps and the waste lines. The filter device (1) allows use of small diameter waste lines on the ship. The filter device (1) is easy to install to an existing waste lines on a ship. The inlet (7) and the outlet (8) can be dimensioned to big diameter or small diameter waste lines. The number of moving parts of the filter device (1) is kept minimal. In one embodiment, the filter (10) is stationary and may comprise several blades that cut the solid particles in the sewage into small particles.

In another embodiment of the invention, the filter (10) may comprise several blades, where the blades may be configured to rotate. The rotation of the blades may be driven by the sewage flow or the vacuum.

In another embodiment, the filter (10) may include a small motor which makes particle grinding possible. The motor might be designed to be part of the filter (10).

In another embodiment of the invention, the outlet (8) of the filter device (1) may be designed to be smaller or greater than the inlet (7).

When the housing compartment (6) is full of solid objects which the filter cannot handle and the toilet is discovered clogged, an alarm might be trigged (not shown) indicating that the filter needs care. The filter device with the problem is located, the transparent cover (5) of the filter device (1) make it easy to verify whether or not the housing compartment (6) is full of solid objects. In the case where the filter device (1) needs care, the sewage is drained from the housing compartment (6) before opening and removing the objects from the compartment (6).

Firstly, the inlet valve (2) is shut off to isolate any further waste inflow from the inlet (7) into the housing compartment (6). In a normal operation the inlet valve (2) is in an open position. Secondly, the outlet valve (8) is shut off to secure the house compartment (6) is sealed for any outflow of the waste via the outlet. There might be some sewage outflow via the outlet (8), when the outlet is kept open, but not as much as the desired normal outflow. This is because the solid objects occupying the passages of the housing compartment (6). The outlet (8) and valve (3) are on the vacuum system and the pump side and always open in a normal operation, in such way that when the vacuum system is activated it sucks any waste (sewage) small enough to pass through the filter (10) openings. The outlet valve (8) may be kept open during the cleaning operation if desired.

After the inlet valve (2) and the outlet valve (3) are shut off, the by-pass drainage passage (9) is opened. The by-pass drainage passage (9) is opened by the drainage valve (4), and kept off in a normal operation. The sewage in the housing compartment (6) passes the by-pass drainage passage (9) through the opening (11) and out through the opening (12) into the outlet (8). In order to drain all sewage in the housing compartment (6), a sufficient pressure is needed otherwise a complete drainage might not be possible. A vacuum may be obtained by activating a vacuum system (or the pump if no vacuum system is possible). The vacuum system (not shown) sucks all the sewage from the housing compartment (6). To ensure that no solid objects are sucked via the passage opening (11), it might be covered by a protecting means (not shown) which prevents any undesired objects to pass through the opening (11).

When the housing compartment (6) is free of sewage, the cover (5) is opened and the solid objects in the housing compartment (6) are removed. After all the necessary care is taken in the housing compartment (6) and the filter (10), the housing cover (5) is reattached. The housing cover (5) is secured to the housing compartment (6) by fastenings means (not shown). The fastening means may be bolts and nuts, pins or any adequate fastening means that can hold the housing and the cover together. It is important that the housing compartment (6) is sealed from any undesired out flux of sewage or vacuum by sealing means (not shown). The sealing means may be rings, tapes or any other adequate sealing means known in the art.

After the housing cover (5) is reattached to the housing (6) and the housing compartment (6) is emptied for any solid objects, the by-pass drainage passage (9) is closed by the drainage valve (4). The outlet valve (3) and the inlet valve (2) are opened to ensure a normal operation again.

When a toilet or a group of toilets are clogged up, it may be detected by an automatic surveillance. A sensor is installed in the housing compartment (6) which is able to detect solid objects in the compartment (6). The sensor can be programmed to trigger an alarm, when a predetermine threshold is exceeded. The alarm might be in a form of a light or a sound. This alarm can be installed on the bridge or in the engine room. The sensor can be programmed to activate the alarm before the housing compartment is clogged if desired. This makes it possible to clean the housing compartment (6) before the toilet is clogged.

The filter device (1) can also be inspected manually or by other means if that is desired. The transparent cover (5) might be made of glass or any other transparent material strong enough to serve the purpose. The housing compartment (6) may be made of steel or a metal or a strong transparent material which makes inspection easy by allowing a clear view, in order to detect any undesired solid objects in the housing compartment (6). The housing compartment (6) may also be made of a robust plastic material that is not transparent.

The filter device (1) can be installed at any desired location on the waste line, but the desired location should be before the vacuum system/pump. It is advantageous to install the filter device (1) in between the small diameter waste lines that runs direct from the toilets at a location which is easy accessible for maintains of the filter device (1). Those who are familiar with clogging problem on marine toilets (cruise ships, vessels, fishing boats, etc.) will appreciate the advantages of this filter device. This filter device almost eliminates the need for a whole area to be shut off because the device can be used in each individual toilet or a group of toilets on a ship. The filter device macerates solids into small particles which can go through the waste lines without clogging up the pipes. Solid objects which are not possible for the filter device to macerate are trapped in the housing compartment. The housing compartment is easily accessible and one can open the housing cover and remove these solid objects.

These and other alternatives will be appreciated by those skilled in the art having the benefit of the present disclosure.

Although the invention has been described above with reference to toilets on a ship, it should be understood that the invention is equally applicable for toilets located at offshore platforms. It should also be understood that the invention is equally applicable to toilets on railways, hospitals, building, cabins and homes.

It should also be understood that the same invention could be used in fabrication of toilets systems with the objective of eliminating or reducing clogging problems.

## Claims

1. A filter device (1) for sewage treatment, the device comprising:
a housing compartment (6) with a removable cover (5); an inlet (7) before said housing compartment (6); an outlet (8) after said housing compartment (6); wherein the housing compartment (6) is provided with a filter (10), **characterized in that** the filter (10) comprises stationary or moving blades; the filter device (1) further comprising
an inlet valve (2) before said housing compartment (6); and a by-pass passage (9) having a drainage inlet (11) from said housing compartment (6) and a drainage outlet (12) after the said housing compartment (6); said by-pass drainage passage (9) being provided with a drainage valve (4) between the inlet (11) and outlet (12).

2. The filter device (1) according to claim 1, wherein the filter device (1) comprises an outlet valve (3) between the housing compartment (6) and the drainage outlet (12).

3. The filter device (1) according to claim 1, wherein the housing compartment (6) is made of transparent material.

4. The filter device according to claim 1, wherein the removable cover (5) is made of transparent material.

5. The filter device according to claim 1, wherein the filter (10) is configured to macerate any solid objects in the housing compartment (6).

6. The filter device according to claim 1, wherein the filter (10) is configured to grind any solid objects in the housing compartment (6) to small particles.

7. The filter device according to claim 1, wherein the filter (10) is provided with a motor.

8. The filter device according to claim 2, wherein the drainage inlet (11) and the drainage outlet (12) comprise covering means.

9. The filter device according to claim 1, wherein the outlet (8) is smaller than the inlet (7).

10. A method of cleaning the filter device according to any of the claims 1-9, **characterized by** the steps of:
a) closing the waste inflow by closing the inlet valve (2);
b) opening the by-pass drainage passage (9) by opening the drainage valve (4);
c) draining sewage from the housing compartment (6) through the by-pass drainage passage (9);
d) opening housing cover (5) and removing all the solid objects in the housing compartment (6).

11. The method according to claim 10, the filter device being according to claims 2 or 8, wherein after step (b), and before step (c), closing waste outflow from the housing compartment (6) via outlet (8) by closing the outlet valve (3).

12. The method according to claim 10, wherein in step (c) a vacuum is used to drain the sewage from the housing compartment (6) through the by-pass drainage passage (9).

13. The method according to any one of the claims 10-12, wherein the housing cover (5) is reattached to the housing compartment (6).

14. The method according to any one of claims 10-13, wherein the drainage valve (4) is shut off after the housing compartment (6) is cleaned.

## Patentansprüche

1. Filtervorrichtung (1) zur Abwasserbehandlung, wobei die Vorrichtung Folgendes umfasst:
ein Gehäusefach (6) mit einem entfernbaren Deckel (5); einen dem Gehäusefach (6) vorgeschalteten Einlass (7); einen dem Gehäusefach (6) nachgeschalteten Auslass (8); wobei das Gehäusefach (6) mit einem Filter (10) versehen ist, **dadurch gekennzeichnet, dass** der Filter (10) ortsfeste oder bewegliche Lamellen umfasst; die Filtervorrichtung (1) ferner ein dem Gehäusefach (6) vorgeschaltetes Einlassventil (2); und einen Umlenkdurchgang (9), der einen dem Gehäusefach (6) vorgeschalteten Ablaufeinlass (11) von dem Gehäusefach (6) aufweist, und einen dem Gehäusefach (6) nachgeschalteten Ablaufauslass (12) umfasst; wobei der Umlenkablaufdurchgang (9) mit einem Ablaufventil (4) zwischen dem Einlass (11) und dem Auslass (12) versehen ist.

2. Filtervorrichtung (1) nach Anspruch 1, wobei die Filtervorrichtung (1) ein Auslassventil (3) zwischen dem Gehäusefach (6) und dem Ablaufauslass (12) umfasst.

3. Filtervorrichtung (1) nach Anspruch 1, wobei das Gehäusefach (6) aus durchlässigem Material hergestellt ist.

4. Filtervorrichtung nach Anspruch 1, wobei der entfernbare Deckel (5) aus durchlässigem Material hergestellt ist.

5. Filtervorrichtung nach Anspruch 1, wobei der Filter (10) zum Einweichen von festen Objekten im Gehäusefach (6) vorgesehen ist.

6. Filtervorrichtung nach Anspruch 1, wobei der Filter (10) zum Mahlen von festen Objekten im Gehäusefach (6) zu kleinen Teilchen vorgesehen ist.

7. Filtervorrichtung nach Anspruch 1, wobei der Filter (10) mit einem Motor versehen ist.

8. Filtervorrichtung nach Anspruch 2, wobei der Ablaufeinlass (11) und der Ablaufauslass (12) Überdeckungsmittel umfassen.

9. Filtervorrichtung nach Anspruch 1, wobei der Auslass (8) kleiner als der Einlass (7) ist.

10. Verfahren zum Reinigen der Filtervorrichtung nach einem der Ansprüche 1-9, **gekennzeichnet durch** die folgenden Schritte:
a) Schließen des Abwasserzustroms durch Schließen des Einlassventils (2);
b) Öffnen des Umlenkablaufdurchgangs (9) durch Öffnen des Ablaufventils (4);
c) Entwässerung von Abwasser von dem Gehäusefach (6) durch den Umlenkablaufdurchgang (9);
d) Öffnen des Gehäusedeckels (5) und Entfernen aller der festen Objekte in dem Gehäusefach (6).

11. Verfahren nach Anspruch 10, wobei die Filtervorrichtung nach Anspruch 2 oder 8 ist, wobei nach dem Schritt (b), und vor dem Schritt (c), Schließen des Abwasserablaufs von dem Gehäusefach (6) über den Auslass (8) durch Schließen des Auslassventils (3).

12. Verfahren nach Anspruch 10, wobei im Schritt (c) ein Vakuum verwendet wird, um das Abwasser von dem Gehäusefach (6) durch den Umlenkablaufdurchgang (9) abzuleiten.

13. Verfahren nach einem der Ansprüche 10-12, wobei der Gehäusedeckel (5) an dem Gehäusefach (6) wieder befestigt wird.

14. Verfahren nach einem der Ansprüche 10-13, wobei das Ablaufventil (4) nach dem Reinigen des Gehäusefachs (6) abgesperrt wird.

## Revendications

1. Dispositif de filtrage (1) pour le traitement des eaux usées, le dispositif comprenant :
un compartiment de boîtier (6) avec un couvercle amovible (5) ; une entrée (7) avant ledit compartiment de boîtier (6) ; une sortie (8) après ledit compartiment de boîtier (6) ; le compartiment de boîtier (6) étant pourvu d'un filtre (10), **caractérisé en ce que** le filtre (10) comprend des lames fixes ou mobiles ; le dispositif de filtrage (1) comprenant en outre une vanne d'entrée (2) avant ledit compartiment de boîtier (6) ; et un passage de drainage de dérivation (9) ayant une entrée de drainage (11) dudit compartiment de logement (6) et une sortie de drainage (12) après ledit compartiment de boîtier (6) ; ledit passage de drainage de dérivation (9) étant pourvu d'une vanne de drainage (4) entre l'entrée (11) et la sortie (12).

2. Dispositif de filtrage (1) selon la revendication 1, dans lequel le dispositif de filtrage (1) comprend une vanne de sortie (3) située entre le compartiment de boîtier (6) et la sortie de drainage (12).

3. Dispositif de filtrage (1) selon la revendication 1, dans lequel le compartiment de boîtier (6) est fait d'un matériau transparent.

4. Dispositif de filtrage selon la revendication 1, dans lequel le couvercle amovible (5) est fait d'un matériau transparent.

5. Dispositif de filtrage selon la revendication 1, dans lequel le filtre (10) est configuré pour faire macérer tout objet solide dans le compartiment de boîtier (6).

6. Dispositif de filtrage selon la revendication 1, dans lequel le filtre (10) est configuré pour broyer tout objet solide dans le compartiment de boîtier (6) en petites particules.

7. Dispositif de filtrage selon la revendication 1, dans lequel le filtre (10) est pourvu d'un moteur.

8. Dispositif de filtrage selon la revendication 2, dans lequel l'entrée de drainage (11) et la sortie de drainage (12) comprennent des moyens de recouvrement.

9. Dispositif de filtrage selon la revendication 1, dans lequel la sortie (8) est inférieure à l'entrée (7).

10. Procédé de nettoyage du dispositif de filtrage selon l'une quelconque des revendications 1 à 9, **caractérisé par** les étapes consistant à :
a) fermer l'arrivée des déchets en fermant la vanne d'entrée (2) ;
b) ouvrir le passage de drainage de dérivation (9) en ouvrant la vanne de drainage (4) ;
c) évacuer les eaux usées du compartiment de boîtier (6) à travers le passage de drainage de dérivation (9) ;
d) ouvrir le couvercle du boîtier (5) et retirer tous les objets solides dans le compartiment du boîtier (6).

11. Procédé selon la revendication 10, le dispositif de filtrage étant selon les revendications 2 ou 8, dans lequel, après l'étape (b) et avant l'étape (c), l'écoulement de déchets depuis le compartiment de boîtier (6) est fermé via la sortie (8) en fermant la vanne de sortie (3).

12. Procédé selon la revendication 10, dans lequel, à l'étape (c), un vide est utilisé pour évacuer les eaux usées à partir du compartiment de boîtier (6) à travers le passage de drainage de dérivation (9).

13. Procédé selon l'une quelconque des revendications 10 à 12, dans lequel le couvercle de boîtier (5) est refixé au compartiment de boîtier (6).

14. Procédé selon l'une quelconque des revendications 10 à 13, dans lequel la vanne de drainage (4) est fermée après le nettoyage du compartiment de boîtier (6).
